# EUROPEAN PATENT SPECIFICATION

(11) **EP 2 990 147 B1**
(45) Date of publication and mention of the grant of the patent: **28.03.2018**
(21) Application number: 15183053.6
(22) Date of filing: 28.08.2015
(51) Int. Cl.: B23D 47/04, B27M 1/08, B27B 5/06

(54) **MACHINE FOR CUTTING WOOD PANELS OR THE LIKE**
VORRICHTUNG ZUM SCHNEIDEN VON HOLZPLATTEN ODER DERGLEICHEN
MACHINE POUR LA COUPE DE PANNEAUX DE BOIS OU SIMILAIRES

(30) Priority: 28.08.2014 IT BO20140471
(43) Date of publication of application: 02.03.2016
(73) Proprietor: BIESSE S.p.A., 61100 Pesaro (IT)
(72) Inventor: BERNARDI, Paolo, 47841 CATTOLICA (IT); LATTANZI, Lorenzo, 61100 PESARO (IT)
(74) Representative: Manconi, Stefano

(56) References cited:
- EP-A1- 0 455 095
- EP-A1- 2 098 343
- EP-A1- 2 574 433
- EP-A2- 0 433 249
- WO-A1-89/08004
- WO-A1-2006/024058

## Description

The present invention relates to a machine to cut wood panels or the like according to the preamble of claim 1. Such a machine is known from WO-2006/024058-A1.

In particular, the present invention relates to a machine to cut wood panels or the like of the type comprising support means defining a supporting plane for at least one panel; a holding and transporting assembly for moving the panel along the supporting plane in a first direction; and a pressing device, which is mounted in a cutting station, extends in a second direction transverse to the first direction, and is mobile between a locking position of the panel on the supporting plane and a release position.

The cutting station is provided with an operating head, which is mounted above the supporting plane between the holding and transporting assembly and the pressing device, is provided with a cutting tool and a suction hood, and is mobile in the second direction for moving the cutting tool along a cutting plane perpendicular to the first direction. The pressing device is in its release position when the panel is cut parallel to the first direction, and is in its locking position when the panel is cut in the second direction.

Combining the displacements of the holding and transporting assembly and, therefore, of the panel in the first direction with the movement of the operating head in the second direction, the cutting tool separates from the panel a plurality of components having different shapes and sizes.

When the component separated from the panel has a relatively reduced width, if measured parallel to the second direction, the pressing device exerts, in its locking position, a relatively high pressure on the panel and a relatively reduced pressure on the component. Consequently, the machines to cut wood panels or the like of the aforesaid type have some drawbacks mainly deriving from the fact that, under the aforesaid operating conditions, the pressing device is incapable, when the cutting tool moves in the second direction, to hold properly the component that is separated from the panel and to prevent the component from rotating around an axis of rotation perpendicular to the supporting plane.

The object of the present invention is to provide a machine to cut wood panels or the like which is free from the aforesaid drawbacks and which is simple and cheap to implement.

Accordingly, the present invention provides a machine to cut wood panels or the like as claimed in the appended claims.

The present invention will now be described with reference to the accompanying drawings illustrating a non-limitative embodiment, wherein:
Figure 1 is a schematic perspective view, with parts removed for clarity's sake, of a preferred embodiment of the machine of the present invention;
Figure 2 is a schematic side view, with parts removed for clarity's sake, of the machine of Figure 1;
Figure 3 is a schematic perspective view, with parts removed for clarity's sake, of a detail of the machine of Figures 1 and 2;
Figures 4 and 5 illustrate schematically in a plan view and, respectively, in side elevation, a first mode of operation of the machine of Figures 1 and 2; and
Figure 6 illustrates in a schematic plan view a second mode of operation of the machine of Figures 1 and 2.

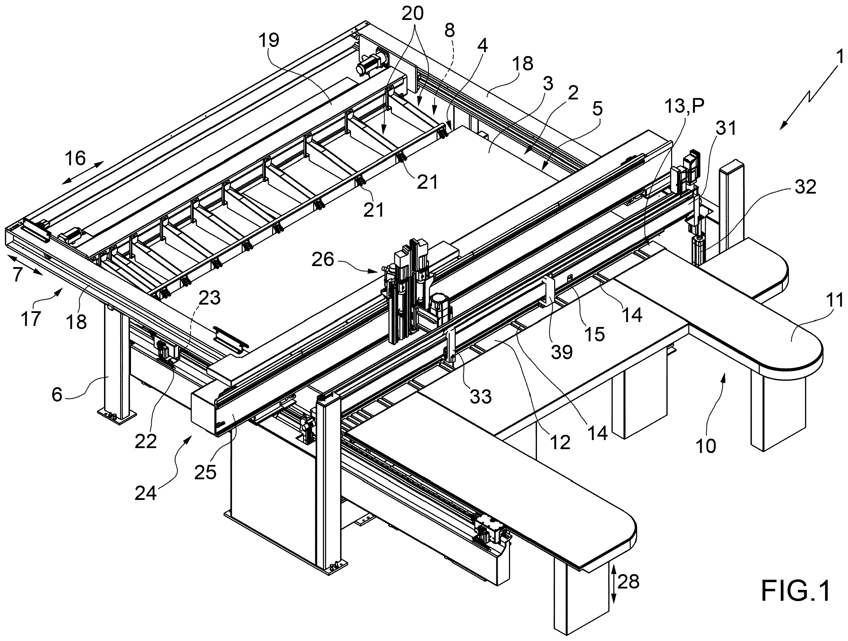

With reference to Figure 1, 1 indicates, as a whole, a machine to cut a wood panel 2 or the like having a substantially rectangular shape.

The panel 2 is limited by two parallel larger faces 3, by two parallel smaller side faces 4 which are perpendicular to the faces 3, and by two parallel smaller side faces 5 which are perpendicular to the faces 3 and 4.

The machine 1 comprises a base 6 having an elongated shape, which extends in a horizontal direction 7 and comprises, in turn, three support devices 8, 9, and 10 arranged in succession one after the other in the direction 7.

The devices 8, 9 and 10 are mutually coplanar to define a supporting plane P on which the panel 2 is arranged with the faces 5 parallel to the direction 7 and with the faces 4 perpendicular to the direction 7.

The device 8 comprises a plurality of roller bars (not shown) parallel to each other and to the direction 7; the device 10 comprises a horizontal outlet table 11; and the device 9 is arranged between the devices 8 and 10 and comprises a horizontal pallet 12.

The pallet 12 is limited by an upper flat surface 13 coplanar with the plane P, and has a plurality of mutually parallel infeed channels 14 which extend in the direction 7 and open outwards at the surface 13.

The pallet 12 also has a cutting channel 15 which extends through the channels 14 in a horizontal direction 16 transverse to the direction 7 and opens outwards at the surface 13.

The machine 1 further comprises a holding and transporting assembly 17 which is configured for feeding the panel 2 in the direction 7, and has two mutually parallel longitudinal guide members 18 which extend in the direction 7 and are arranged on opposite sides of the devices 8 and 9 in the direction 16.

The members 18 support a cross member 19 which extends in the direction 16 and is slidingly coupled to the longitudinal members 18 to perform rectilinear movements in both senses of the direction 7 relative to the longitudinal members 18.

The device 17 further comprises a plurality of main holding members 20 distributed along the cross member 19 to hold the panel 2 in correspondence of one of the faces 4.

Each member 20 extends between two roller bars (not shown) of the device 8, and comprises tongs 21 which extend in part below the plane P, are aligned with a respective channel 14 in the direction 7 and are mobile between a locking position and a release position of the panel 2.

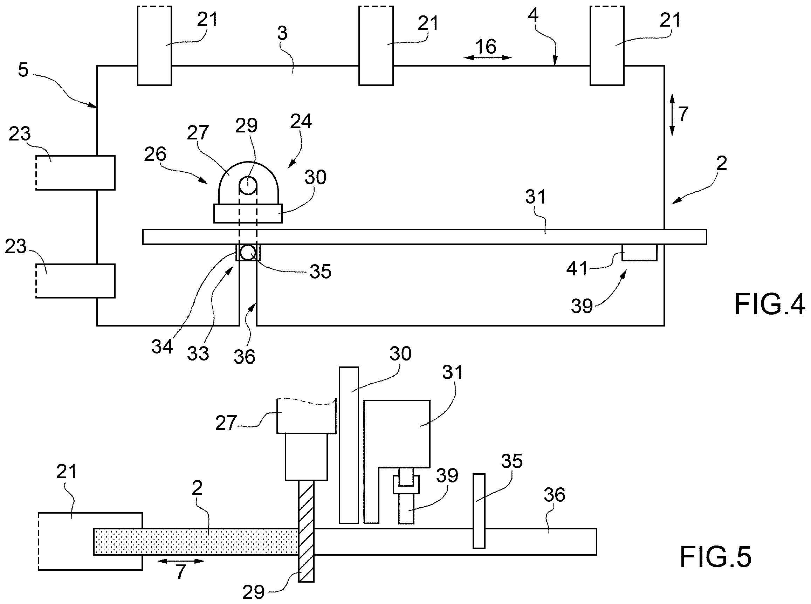

As illustrated in Figures 1 and 4, the device 17 is further provided with at least one auxiliary holding member 22, which is slidingly coupled to the base 6 to perform rectilinear movements along the base 6 in the direction 7, is oriented towards the panel 2 in the direction 16 and comprises tongs 23 mobile between a locking position and a release position of one of the faces 5.

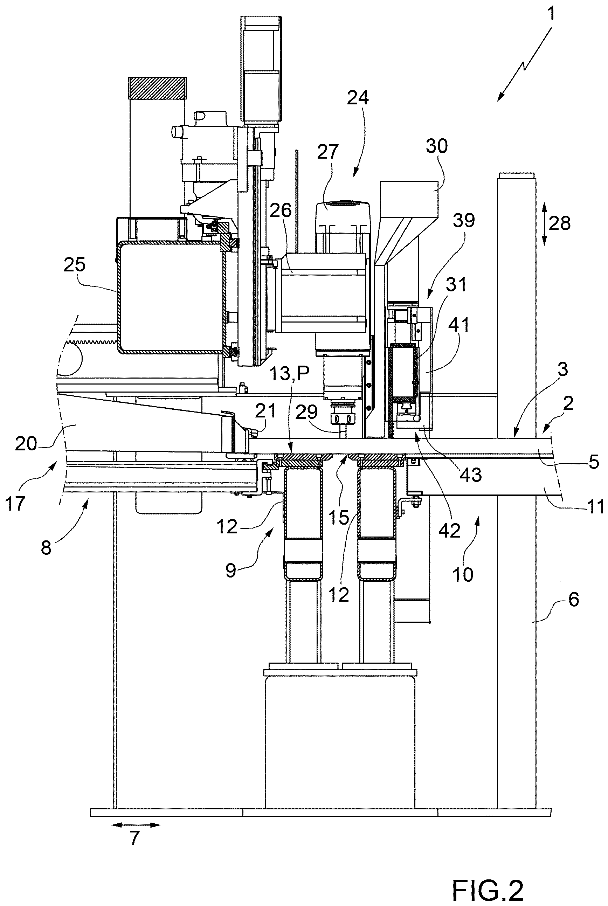

With reference to Figures 1 and 2, the machine 1 further comprises an operating unit 24, which is mounted in correspondence of the cutting channel 15 and has a cross member 25 which extends above the plane P in the direction 16 and supports, in this case, an operating head 26.

The head 26 is mobile along the cross member 25 in the direction 16 and supports an electric spindle 27, which is slidingly coupled to the head 26 to perform, relative to the head 26, rectilinear movements in a vertical direction 28 orthogonal to the directions 7 and 16, and which supports a cutting tool 29, in this case a milling cutter, aligned with the channel 15 in the direction 28.

The electric spindle 27 is further associated to a sucking hood 30 which is connected with a known and not illustrated sucking pneumatic device, is adapted to collect shavings and/or machining scraps produced by the tool 29, and is mobile with the electric spindle 27 in the direction 16. The machine 1 further comprises a main pressing device 31, which extends in the direction 16, is mounted above the plane P and is mobile in the direction 28 between a locking position, in which the panel 2 is locked against the plane P to allow the tool 29 to cut the panel 2 in the direction 16, and a release position.

In other words, the pressing device 31 is in its release position when the panel 2 is cut parallel to the direction 7 and is in its locking position when the panel 2 is cut in the direction 16.

With regard to the aforesaid, the sucking hood 30 is arranged between the bar 25 and the pressing device 31 and the pressing device 31 is moved between its locking position and its release position by a pair of actuating cylinders 32 (or by other operating devices) mounted at the ends of the pressing device 31 parallel to the direction 28.

As shown in Figures 1, 2 and 3, the pressing device 31 supports a closing and blowing device 33 comprising a slide 34, which is mounted on the pressing device 31 on the opposite side of the cross member 25 in the direction 7, and is slidingly coupled to the pressing device 31 to perform rectilinear displacements in the direction 16 relative to the pressing device 31.

The slide 34 is provided with a blowing rod 35 which extends in the direction 28 and has a diameter approximating by defect the diameter of the tool 29.

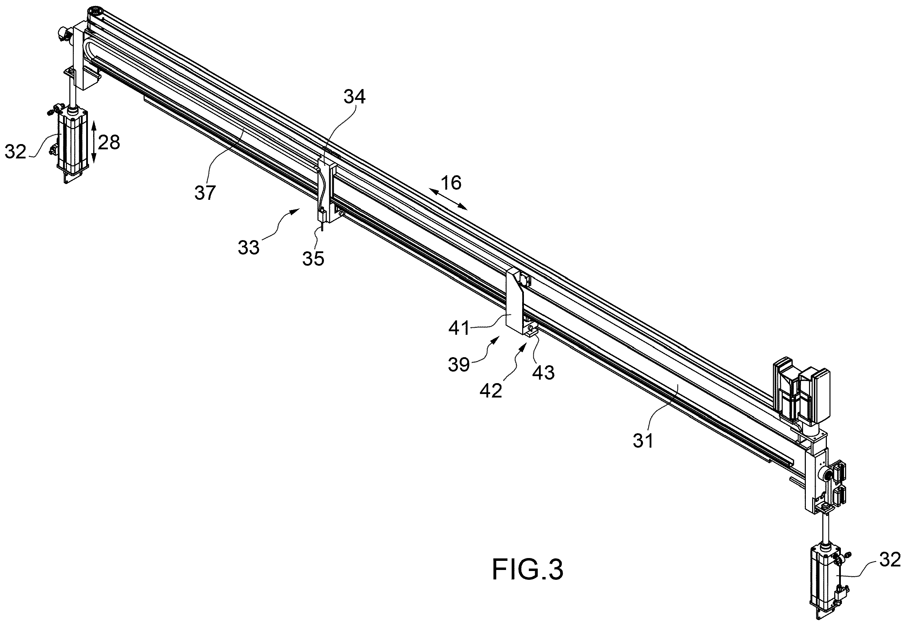

With reference to Figures 4 and 5, the rod 35 is mobile, relative to the slide 34, in the direction 28 between a lowered operating position, in which the rod 35 engages a infeed channel 36 created by the tool 29 through the panel 2 parallel to the direction 7, and a raised resting position, in which the rod 35 disengages the channel 36. The rod 35 is provided with at least one opening (not shown) facing the tool 29, and is connected with a flexible feed duct 37 (Figure 3), which extends along the pressing device 31 in the direction 16 and is connected with a known and not illustrated compressed air pneumatic device.

In use, the blowing rod 35 is moved into the lowered operating position when the panel 2 is cut in the direction 7 so as to close at least partially the infeed channel 36 to prevent shavings and/or machining scraps from leaking out of the channel 36, and to let in the channel 36 a flow of compressed air oriented so as to convey the chips and/or the processing scraps to the sucking hood 30.

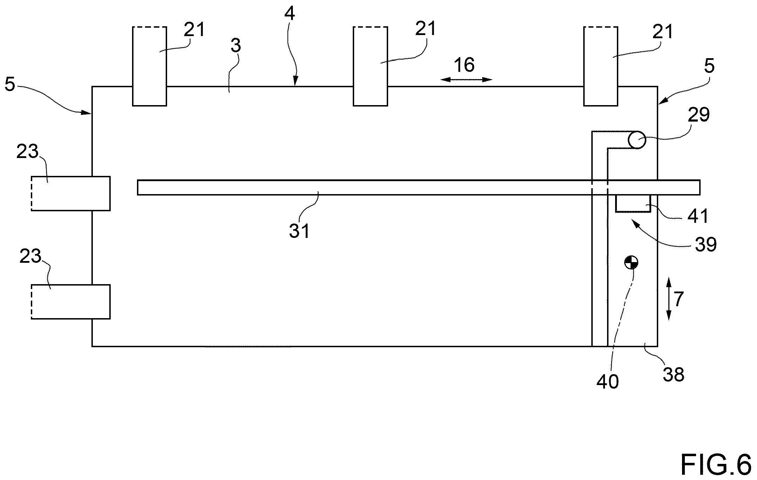

As shown in Figure 6, when the component 38, which is separated from the panel 2, has a relatively reduced width, measured parallel to the direction 16, the pressing device 31 cooperates with a locking device 39 designed to prevent the component 2 from rotating around an axis of rotation 40 perpendicular to the plane P when the pressing device 31 is arranged in its locking position and the tool 29 is moved in the direction 16.

With reference to Figures 3-6, the device 39 comprises a slide 41 which is mounted on the pressing device 31 on the opposite side of the cross member 25 in the direction 7, and is slidingly coupled to the pressing device 31 to perform straight movements in the direction 16 relative to the pressing device 31.

The device 39 further comprises a locking member 42 mounted on the slide 41 and mobile, relative to the slide 41, in the direction 28 between a lowered operating position, in which the member 42 engages the component 38 to prevent its rotation around the axis 40, and a resting position, in which the member 42 disengages the component 38.

In the present case, the member 42 is an auxiliary pressing device, and comprises a locking plate 43 which is mounted below the slide 41 and is mobile, relative to the slide 41, in the direction 28 between a locking position of the panel 2 on the plane P and a release position.

With regard to the aforesaid, in the absence of the panel 2, the height from the ground of the locking position of the plate 43 is smaller than the height from the ground of the locking position of the pressing device 31.

According to some variations not shown:
the member 42 is a sucking locking member, which is connected with a sucking pneumatic device, and is mounted so as to engage the upper larger face of the component 38 as a result of its displacement in the aforesaid lowered operating position;
the member 42 is a limit-stop rod mounted so as to engage, individually or in combination with the rod 35, a side profile of the component 38, in particular at one of the faces 5, subsequent to its movement to said operating position;
the rod 35 and the member 42 are mounted on the same slide 34, 41;
the rod 35 is mounted on the slide 34 so as to move, relative to the slide 34, in the direction 7;
the member 42 is mounted on the slide 41 so as to move, relative to the slide 34, in the direction 7;
the rod 35 and the member 42 are mounted on the relative slides 34, 41 so as to move relative to the relative slides 34, 41 in the direction 7, and so as to download the components 7 on the table 11; and
the slides 34 and/or 41 support an unloading device (for example a conveyor belt) mobile in the direction 7 so as to move automatically the components 38 on the table 11.

## Claims

1. A machine to cut wood panels (2) or the like, the machine comprising support means (8, 9, 10) defining a supporting plane (P) for at least one panel (2); a holding and transporting assembly (17) to move the panel (2) in a first direction (7); a main pressing device (31), which extends in a second direction (16) that is transverse to the first direction (7) and is mobile between a locking position, in which the panel (2) is locked on the supporting plane (P), and a release position; and an operating head (26), which is provided with a cutting tool (29) and is mobile in the second direction (16) so as to move the cutting tool (29) along a cutting plane that is perpendicular to the first direction (7) and so as to separate at least one component (38) from the panel (2); and a locking device (39) to prevent said component (38) from rotating around a rotation axis (40) that is perpendicular to the supporting plane (P), when the main pressing device (31) is arranged in its locking position and the cutting tool (29) is moved in the second direction (16); and being **characterised in that** it further comprises a closing device (33), which is mounted on the main pressing device (31), and is mobile from and to a lowered operating position, in which the closing device (33) is arranged inside of - and at least partially closes - an infeed channel (36) created by the cutting tool (29) through the panel (2) parallel to the first direction (7); the locking device (39) and the closing device (33) being mobile along the main pressing device (31) in the second direction (16) with respective laws of motion that are independent of one another.

2. A machine according to Claim 1, wherein the locking device (39) is mounted on the main pressing device (31) and is mobile along the main pressing device (31) in the second direction (16).

3. A machine according to Claim 1 or 2, wherein the locking device (39) is mounted on the opposite side of the operating head (26) relative to the main pressing device (31) in the first direction (7).

4. A machine according to any one of the preceding Claims, wherein the locking device (39) comprises a slide (41), which is slidingly coupled to the main pressing device (31) so as to perform straight movements in the second direction (16), and at least one locking member (42), which is mobile between an operating position, in which the locking member (42) engages the component (38) so as to prevent it from rotating around said rotation axis (40), and a resting position, in which the locking member (42) disengages the component (38).

5. A machine according to Claim 4, wherein the locking member (42) is an auxiliary pressing device, which is mounted so as to engage a larger face of the component (38) subsequent to its movement to said operating position.

6. A machine according to Claim 5, wherein, without the panel (2), the height from the ground of the locking position of the auxiliary pressing device is smaller than the height from the ground of the locking position of the main pressing device (31).

7. A machine according to Claim 4, wherein the locking member (42) is a sucking locking member, which is connected to a sucking pneumatic device and is mounted so as to engage a larger face of the component (38) subsequent to its movement to said operating position.

8. A machine according to Claim 4, wherein the locking member (42) is a limit-stop rod, which is mounted so as to engage a side profile of the component (38) subsequent to its movement to said operating position.

9. A machine according to any one of the preceding Claims, wherein the operating head (26) is mounted above the supporting plane (P) between the holding and transporting assembly (17) and the main pressing device (31) and is provided with a sucking hood (30).

10. A machine according to any one of the preceding Claims, wherein the operating head (26) and the closing device (33) are mobile in the second direction (16) with respective laws of motion that are independent of one another.

11. A machine according to any one of the preceding Claims, wherein the closing device (33) comprises a pin member (35), which extends in a third direction (28) that is perpendicular to the supporting plane (P), and is mobile between the lowered operating position and a raised resting position.

12. A machine according to any one of the preceding Claims, wherein the closing device (33) has a size, which is measured parallel to the second direction (16) and which, at the most, is equal to a size of the cutting tool (29), which is also measured parallel to the second direction (16).

13. A machine according to any one of the preceding Claims, wherein the closing device (33) has at least one opening that is oriented towards the sucking hood (30) and is connected to a pneumatic device that is designed to feed a flow of compressed air through the opening.

14. A machine according to any one of the preceding Claims, wherein the closing device (33) is mounted on the opposite side of the operating head (26) relative to the main pressing device (31) in the first direction (7).

## Patentansprüche

1. Maschine zum Schneiden von Holztafeln (2) oder dergleichen, umfassend Trageinrichtungen (8, 9, 10), die eine Tragebene (P) für wenigstens eine Tafel (2) bilden, eine Halte- und Transporteinheit (17) zum Bewegen der Tafel (2) in einer ersten Richtung (7), eine Hauptpresseinrichtung (31), die sich in einer zweiten Richtung (16) erstreckt, quer zur ersten Richtung (7), und die beweglich ist zwischen einer Verriegelungsposition, in welcher die Tafel (2) auf der Tragebene (P) verriegelt ist, und einer Freigabeposition; einen Arbeitskopf (26), versehen mit einem Schneidwerkzeug (29), und beweglich in der zweiten Richtung (16), um das Schneidwerkzeug (29) entlang einer Schneidebene zu bewegen, senkrecht zur ersten Richtung (7), um wenigstens eine Komponente (38) von der Tafel (2) abzutrennen; und eine Verriegelungseinrichtung (39), um ein Verdrehen der Komponente (38) um eine Drehachse (40) zu verhindern, senkrecht zur Tragebene (P), wenn sich die Hauptpresseinrichtung (31) in ihrer Verriegelungsposition befindet und das Schneidwerkzeug (29) in die zweite Richtung (16) bewegt wird, **dadurch gekennzeichnet, dass** sie ferner eine Schließeinrichtung (33) umfasst, die an der Hauptpresseinrichtung (31) montiert ist, und die beweglich ist von und zu einer abgesenkten Arbeitsposition, in welcher die Schließeinrichtung (33) innerhalb eines diesen wenigstens teilweise absperrenden Zufuhrkanales (36) angeordnet ist, gebildet aus dem Schneidwerkzeug (29) durch die Tafel (2) parallel zur ersten Richtung (7); die Verriegelungseinrichtung (39) und die Schließeinrichtung (33) sind zwischen der Hauptpresseinrichtung (31) in der zweiten Richtung (16) gemäß entsprechenden Bewegungsgesetzen beweglich, die unabhängig voneinander sind.

2. Maschine nach Anspruch 1, wobei die Verriegelungseinrichtung (39) an der Hauptpresseinrichtung (31) montiert und entlang dieser in der zweiten Richtung (16) bewegbar ist.

3. Maschine nach Anspruch 1 oder 2, wobei die Verriegelungseinrichtung (39) auf der dem Arbeitskopf (26) gegenüberliegenden Seite relativ zur Hauptpresseinrichtung (31) in der ersten Richtung (7) beweglich ist.

4. Maschine nach einem der vorausgegangenen Ansprüche, wobei die Verriegelungseinrichtung (39) einen Schlitten (41) umfasst, gleitend an die Hauptpresseinrichtung (31), um eine gradlinige Bewegung in der zweiten Richtung (16) auszuführen, und wenigstens einen Riegel (42), der bewegbar ist zwischen einer Arbeitsposition, in welcher der Riegel (42) die Komponente (38) umfasst, um dessen Verdrehen um die Drehachse (40) zu verhindern, und einer Ruheposition, in welcher der Riegel (42) die Komponente (38) freigibt.

5. Maschine nach Anspruch 4, wobei der Riegel (42) eine Hilfspresseinrichtung ist, derart montiert, dass er eine größere Fläche der Komponente (38) nach deren Bewegung in die Arbeitsposition erfasst.

6. Maschine nach Anspruch 5, wobei die Höhe vom Boden der Verriegelungsposition der Hilfspresseinrichtung ohne die Tafel (2) kleiner als die Höhe vom Boden der Verriegelungsposition der Hauptpresseinrichtung (31) ist.

7. Maschine nach Anspruch 4, wobei der Riegel (42) ein saugender Riegel ist, angeschlossen an eine pneumatische Saugeinrichtung, und derart montiert, dass er eine größere Fläche der Komponente (38) nach dessen Bewegung in die Arbeitsposition erfasst.

8. Maschine nach Anspruch 4, wobei der Riegel (42) ein Grenzanschlagstab ist, derart montiert, dass er ein Seitenprofil der Komponente (38) nach deren Bewegung in die Arbeitsposition erfasst.

9. Maschine nach einem der vorausgegangenen Ansprüche, wobei der Arbeitskopf (26) oberhalb der Tragebene (P) zwischen der Halte- und Transporteinrichtung (17) und der Hauptpresseinrichtung (31) montiert und mit einer Saughaube (30) versehen ist.

10. Maschine nach einem der vorausgegangenen Ansprüche, wobei der Arbeitskopf (26) und die Schließeinrichtung (33) in der zweiten Richtung (16) gemäß Bewegungsgesetzen bewegbar sind, die voneinander unabhängig sind.

11. Maschine nach einem der vorausgegangenen Ansprüche, wobei die Schließeinrichtung (33) einen Stift (35) umfasst, der sich in einer dritten Richtung (28) senkrecht zur Tragebene (P) erstreckt, und der zwischen der abgesenkten Betriebsposition und einer angehobenen Ruheposition bewegbar ist.

12. Maschine nach einem der vorausgegangenen Ansprüche, wobei die Schließeinrichtung (33) eine Größe aufweist, die parallel zur zweiten Richtung (16) maximal gleich der Größe des Schneidwerkzeuges (29) ist, ebenfalls gemessen zur zweiten Richtung (16).

13. Maschine nach einem der vorausgegangenen Ansprüche, wobei die Schließeinrichtung (33) wenigstens eine Öffnung aufweist, die zur Saughaube (30) hin ausgerichtet und an eine pneumatische Einrichtung angeschlossen ist, die einen Druckluftstrom zur Öffnung hin fördert.

14. Maschine nach einem der vorausgegangenen Ansprüche, wobei die Schließeinrichtung (33) an der gegenüberliegenden Seite des Arbeitskopfes (26) und relativ zur Hauptpresseinrichtung (31) in der ersten Richtung (7) montiert ist.

## Revendications

1. Machine pour couper des panneaux en bois (2) ou similaires, la machine comprenant des moyens de support (8, 9, 10) définissant un plan de support (P) pour au moins un panneau (2) ; un ensemble de retenue et de transport (17) pour déplacer le panneau (2) dans une première direction (7) ; un dispositif d'appui principal (31), qui s'étend dans une deuxième direction (16) qui est transversale à la première direction (7) et est mobile entre une position de verrouillage, dans laquelle le panneau (2) est bloqué sur le plan de support (P), et une position de libération ; et une tête opérationnelle (26), qui est pourvue d'un outil coupant (29) et est mobile dans la deuxième direction (16) de façon à déplacer l'outil coupant (29) le long d'un plan de coupe qui est perpendiculaire à la première direction (7) et de façon à séparer au moins un composant (38) du panneau (2) ; et un dispositif de verrouillage (39) pour empêcher ledit composant (38) de tourner autour d'un axe de rotation (40) qui est perpendiculaire au plan de support (P), lorsque le dispositif d'appui principal (31) est agencé dans sa position de verrouillage et l'outil coupant (29) est déplacé dans la deuxième direction (16) ; et étant **caractérisée en ce qu'**elle comprend en outre un dispositif de fermeture (33), qui est monté sur le dispositif d'appui principal (31), et est mobile depuis et vers une position opérationnelle descendue, dans laquelle le dispositif de fermeture (33) est agencé à l'intérieur de - et ferme au moins partiellement - un canal d'amenée (36) créé par l'outil coupant (29) à travers le panneau (2) parallèle à la première direction (7) ; le dispositif de verrouillage (39) et le dispositif de fermeture (33) étant mobiles le long du dispositif d'appui principal (31) dans la deuxième direction (16) avec des lois du mouvement respectives qui sont indépendantes les unes des autres.

2. Machine selon la revendication 1, dans laquelle le dispositif de verrouillage (39) est monté sur le dispositif d'appui principal (31) et est mobile le long du dispositif d'appui principal (31) dans la deuxième direction (16).

3. Machine selon la revendication 1 ou 2, dans laquelle le dispositif de verrouillage (39) est monté sur le côté opposé de la tête opérationnelle (26) par rapport au dispositif d'appui principal (31) dans la première direction (7).

4. Machine selon l'une quelconque des revendications précédentes, dans laquelle le dispositif de verrouillage (39) comprend un coulisseau (41), qui est couplé en coulissement au dispositif d'appui principal (31) de façon à réaliser des déplacements droits dans la deuxième direction (16), et au moins un organe de verrouillage (42), qui est mobile entre une position opérationnelle, dans laquelle l'organe de verrouillage (42) engage le composant (38) de façon à l'empêcher de tourner autour dudit axe de rotation (40), et une position de repos, dans laquelle l'organe de verrouillage (42) désengage le composant (38).

5. Machine selon la revendication 4, dans laquelle l'organe de verrouillage (42) est un dispositif d'appui auxiliaire, qui est monté de façon à engager une face plus grande du composant (38) suite à son déplacement vers ladite position opérationnelle.

6. Machine selon la revendication 5, dans laquelle, sans le panneau (2), la hauteur depuis le sol de la position de verrouillage du dispositif d'appui auxiliaire est plus petite que la hauteur depuis le sol de la position de verrouillage du dispositif d'appui principal (31).

7. Machine selon la revendication 4, dans laquelle l'organe de verrouillage (42) est un organe de verrouillage aspirant, qui est raccordé à un dispositif pneumatique aspirant et est monté de façon à engager une face plus grande du composant (38) suite à son déplacement vers ladite position opérationnelle.

8. Machine selon la revendication 4, dans laquelle l'organe de verrouillage (42) est une tige d'arrêt de limite, qui est montée de façon à engager un profil de côté du composant (38) suite à son déplacement vers ladite position opérationnelle.

9. Machine selon l'une quelconque des revendications précédentes, dans laquelle la tête opérationnelle (26) est montée au-dessus du plan de support (P) entre l'ensemble de retenue et de transport (17) et le dispositif d'appui principal (31) et est pourvue d'une hotte aspirante (30).

10. Machine selon l'une quelconque des revendications précédentes, dans laquelle la tête opérationnelle (26) et le dispositif de fermeture (33) sont mobiles dans la deuxième direction (16) avec des lois du mouvement respectives qui sont indépendantes les unes des autres.

11. Machine selon l'une quelconque des revendications précédentes, dans laquelle le dispositif de fermeture (33) comprend un organe de tige (35), qui s'étend dans une troisième direction (28) qui est perpendiculaire au plan de support (P), et est mobile entre la position opérationnelle descendue et une position de repos élevée.

12. Machine selon l'une quelconque des revendications précédentes, dans laquelle le dispositif de fermeture (33) a une taille, qui est mesurée parallèle à la deuxième direction (16) et qui, au plus, est égale à une taille de l'outil coupant (29), qui est également mesurée parallèle à la deuxième direction (16).

13. Machine selon l'une quelconque des revendications précédentes, dans laquelle le dispositif de fermeture (33) a au moins une ouverture qui est orientée vers la hotte aspirante (30) et est raccordé à un dispositif pneumatique qui est conçu pour amener un flux d'air comprimé à travers l'ouverture.

14. Machine selon l'une quelconque des revendications précédentes, dans laquelle le dispositif de fermeture (33) est monté sur le côté opposé de la tête opérationnelle (26) par rapport au dispositif d'appui principal (31) dans la première direction (7).
